# EUROPÄISCHE PATENTSCHRIFT

(11) **EP 0 305 680 B1**
(45) Veröffentlichungstag und Bekanntmachung des Hinweises auf die Patenterteilung: **17.11.1994**
(21) Anmeldenummer: 88110683.5
(22) Anmeldetag: 05.07.1988
(51) Int. Cl.: G06F 1/00, G06F 15/16

(54) **Steuerung eines Grossrechners durch eine Fernstation**
Main frame control by a distant work station
Commande d'un ordinateur principal par un poste de travail éloigné

(30) Priorität: 09.07.1987 DE 3722766
(43) Veröffentlichungstag der Anmeldung: 08.03.1989
(73) Patentinhaber: debis SYSTEMHAUS CSF GmbH, 65760 Eschborn (DE)
(72) Erfinder: Huber, Rainer, D-7056 Weinstadt 1 (DE); Frühwald, Rainer, D-7000 Stuttgart 1 (DE)
(74) Vertreter: Rieger, Harald, Dr.

(56) Entgegenhaltungen:
- US-A- 4 051 326
- COMPUTER DESIGN, Band 23, Nr. 2, Februar 1984, Seiten 231-236, Winchester, Mass, USA; D. ERLIN: "Establishing the Micro-to-Mainframe connection"
- PATENT ABSTRACTS OF JAPAN, Band 9, Nr. 120 (P-358)[1843], 24. Mai 1985; & JP-A-60 5366 (FUJITSU K.K.) 11-01-1985
- Hilberg, W. et al.: "Mikroprozessoren und ihre Anwendungen", R. Oldenbourg Verlag 1977, S. 140-149.

## Beschreibung

Die Erfindung betrifft eine Rechenanlage mit einem Großrechnersystem mit zwei Bedienungskonsolen und mit einem Personalcomputer, welcher als selbständiger Rechner oder als Terminal des Großrechnersystems betreibbar ist und für die letztgenannte Betriebsart mit einer Zusatzkarte ausgestattet ist, auf der sich Schaltkreise zur Umsetzung von Informationen des Großrechnersystems in durch den Personalcomputer verarbeitbare Daten unter Steuerung durch eine zentrale Recheneinheit (CPU) der Karte und in Abhängigkeit vom Inhalt eines programmierbaren Lesespeichers der Karte sowie zur Umwandlung von Informationen des Personalcomputers in durch das Großrechnersystem verarbeitbare Informationen befinden.

Derartige Rechenanlagen sind bekannt und haben den Vorteil, daß der Personalcomputer einerseits als selbständige Einheit betrieben werden kann, auf welcher die anfallenden Arbeiten erledigt werden können, ohne den Hauptrechner zu belasten, wobei jedoch ergänzend die Möglichkeit besteht, auch auf Daten bzw. Informationen des Großrechnersystems zuzugreifen und/oder ergänzende Daten in dieses einzuspeisen. Es ist also prinzipiell bekannt, zwischen einem Großrechnersystem und einem Personalcomputer Informationen und Daten auszutauschen, wie z.B. beschrieben von Erlin, D.: "Establishing the micro-to-mainframe connection" in Computer Design, 23 (1984) Febr., No. 2, Winchester, Massachusetts, USA, Seiten 231-236.

Während ein Personalcomputer nach Einschalten der Netzspannung praktisch sofort betriebsbereit ist bzw. für das Einspeichern des Betriebssystems von einer Diskette oder dergleichen bereit steht, ist andererseits das Einschalten oder, genauer gesagt, die Betriebsaufnahme bei einem Großrenersystem ein ziemlich komplizierter und vergleichsweise langwieriger Vorgang, der bei leistungsfähigen Großrechnersystemen etwa eine halbe Stunde bis zur Betriebsbereitschaft in Anspruch nimmt, da nach dem Einschalten der Netzspannung zunächst zeitlich genau gestaffelte Einschaltsignale für die Stromversorgungseinheiten erzeugt werden müssen, die aus der Netzspannung im allgemeinen einen Drehstrom mit einer erhöhten Frequenz von beispielsweise 400 Hz erzeugen, aus dem dann nach Einschalten des Großrechnersystems an der Prozessorsteuereinheit die verschiedenen Versorgungsspannungen, insbesondere die verschieden Gleichspannungen für das System abgeleitet werden. Außerdem sind nacheinander die einzelnen Peripheriegeräte wie Drucker, Speicher, Streamer usw. einzuschalten, wobei all diese Schaltvorgänge bezüglich entsprechender Rückmeldungs- und Prüfsignale an der Systemkonsole überwacht werden müssen, um das störungsfreie Anlaufen des Systems zu überwachen und bei Störungen gegebenenfalls geeignete Maßnahmen einzuleiten. Erst dann kann schließlich über die Systemkonsole des Großrechnersystems das Laden des Betriebssystems veranlaßt werden, wobei über die Betriebskonsole eine ständige Überwachung erfolgen muß und im Wechsel zwischen Systemkonsole und Betriebskonsole Eingaben über die Tastatur notwendig werden, bis schließlich mit dem Einspeichern der einzelnen Programme begonnen werden kann. Auch das Abschalten eines Großrechnersystems ist ein vergleichsweise komplizierter Vorgang, da an den verschiedenen Punkten des Systems gesorgt werden muß, daß die in unterschiedlichen flüchtigen Speichern zum Abschaltzeitpunkt vorhandenen Daten, soweit erforderlich, in einem nicht-flüchtigen Speicher, insbesondere innerhalb eines Schnellspeichers (Memorex-Einheit), abgespeichert werden, bevor die Stromversorgung (50 Hz Drehstrom) vollständig ausgeschaltet werden kann.

Es hat sich gezeigt, daß die an jedem einzelnen Arbeitstag vor dem eigentlichen Arbeitsbeginn erforderliche unproduktive Startzeit für ein Großrechnersystem, die sich, wie gesagt, etwa über eine halbe Stunde erstreckt, für eine rationelle Arbeitsplanung sehr störend ist, da entweder alle Mitarbeiter warten müssen, bis das System wirklich betriebsbereit ist oder da im anderen Falle ein oder mehrere Mitarbeiter relativ früh im Rechenzentrum erscheinen müßten, um das Großrechnersystem "hochzufahren", d.h. betriebsbereit zu machen.

Ein weiteres Problem, das sich beim derzeitigen Einsatz von Rechenanlagen mit einem oder mehreren Großrechnersystemen ergibt, besteht darin, daß es für eine rationelle Auslastung der Anlage und für die Bewältigung der anfallenden Arbeiten immer häufiger erwünscht bzw. erforderlich ist, daß die Rechenanlage auch außerhalb der normalen Arbeitszeiten automatisch weiterläuft, insbesondere, um Datenfernverarbeitungsienste (Dialog-Auswertungen) zur Verfügung zu stellen und darüber hinaus anhand von während der normalen Arbeitszeit eingegebenen Daten Briefe und Listen auszudrucken.

Ausgehend vom Stande der Technik und der vorstehend aufgezeigten Problematik liegt der Erfindung die Aufgabe zugrunde, eine gattungsgemäße Rechenanlage dahingehend zu verbessern, daß das Hochfahren der Rechenanlage vom stromlosen Zustand bis zur vollen Funktionsfähigkeit jederzeit von einem einzigen, insbesondere außerhalb des eigentlichen Rechenzentrums gelegenen Arbeitsplatz aus durchgeführt werden kann und daß auch ein automatisches, definiertes Abschalten der Rechenanlage bis zum stromlosen Zustand zu frei wählbaren Dienstendezeiten von einem einzigen Arbeitsplatz durchgeführt werden kann.

Diese Aufgabe wird gemäß der Erfindung dadurch gelöst, daß der Personalcomputer mindestens zwei weitere derartige Zusatzkarten umfaßt, welchen verschiedene, jeweils von der Adresse der ersten Zusatzkarte abweichende Adressen zugeordnet sind und die anstelle der Bedienungskonsolen des Großrechnersystems mit diesem verbindbar sind, und daß der Personalcomputer ausgangsseitig mit der Prozessorsteuereinheit des Großrechnersystems über eine Schnittstellen/Umsetzerschaltung verbunden ist, mit der Schalteinrichtung zum Ein- und Ausschalten des Großrechnersystems verbunden sind.

Es ist ein wichtiger Vorteil der Rechenanlage gemäß der Erfindung, daß infolge der Verwendung zweier weiterer Zusatzkarten in Verbindung mit dem Einsatz einer Schnittstellen/Umsetzerschaltung die Möglichkeit besteht, von dem Personalcomputer aus nicht nur die üblichen Datenverbindungen von und zu dem Großrechnersystem aufbauen zu können, sondern auch alle mit der Inbetriebnahme und dem Abschalten des Großrechnersystems im Zusammenhang stehenden Funktionen von dem Personalcomputer aus durchführen zu können, der dabei die Funktion der zwei Bedienungskonsolen des Großrechnersystems übernimmt.

Im einzelnen ist der Personalcomputer bei der erfindungsgemäßen Rechenanlage ständig eingeschaltet und dient zunächst einmal dazu, das Großrechnersystem zu vorprogrammierbaren Zeitpunkten automatisch nach einem zuvor abgespeicherten Steuerprogramm aus dem abgeschalteten Zustand bis in den betriebsbereiten Zustand zu bringen sowie dazu, das Großrechnersystem zu frei programmierbaren Dienstendezeiten gemäß einem Abschaltprogramm wieder abzuschalten. Außerdem werden Störungen während des Einschaltvorgangs oder des Ausschaltvorgangs sowie während des laufenden Betriebs von dem Personalcomputer anhand entsprechender Programme erfaßt und in den meisten Fällen behoben, beispielsweise durch Wiederholen einer gewissen Anzahl von Steuerschritten durch Zuschalten von Reserveeinheiten usw. Ferner kann bei behebbaren und nicht behebbaren Störungen ein Alarm ausgelöst werden, um in den Fällen, in denen aufgetretene Störungen nicht automatisch behoben werden können, einen Mitarbeiter zu alarmieren.

Aufgrund des bis auf wenige Störungen durch den erfindungsgemäßen Einsatz eines Personalcomputers erreichbaren vollautomatischen Betriebes der Rechenanlage ergibt sich zunächst einmal der Vorteil, daß außerhalb der normalen Dienstzeiten kein ständiger Bereitschaftsdienst im Rechenzentrum benötigt wird, was aus sozialen Gründen höchst erwünscht ist, da ein derartiger Bereitschaftsdient in den Nachtstunden und an Sonn- und Feiertagen die betreffenden Mitarbeiter und deren Familien doch erheblich belastet, zumal die Wahrscheinlichkeit des Auftretens von Störungen in gut gewarteten und richtig konziperten modernen Rechenanlagen gering ist und bei dem betroffenen Mitarbeiter leicht das Gefühl entsteht "unnütz herumzusitzen".

Ein weiterer Vorteil ergibt sich für den Betreiber der Rechenanlage dadurch, daß die Betriebs- und Lohnkosten durch den praktisch vollautomatischen Betrieb gesenkt werden. Außerdem bedeutet die Möglichkeit des Verzichts auf einen ständigen Bereitschaftsdienst außerhalb der normalen Dienststunden einen nicht unbeträchtlichen Sicherheitsgewinn, da das Rechenzentrum bis auf den Fall, daß akute Störungen eintreten, vollständig geschlossen bleiben kann, wodurch auch die Möglichkeiten für das Eindringen unbefugter Dritter in das Rechenzentrum drastisch verringert werden und wodurch schließlich zusätzlich das Risiko verringert wird, daß ein ganz allein im Rechenzentrum befindlicher Mitarbeiter zu unerlaubten Manipulationen verleitet wird, die besonders bei Geldinstituten zu erheblichen wirtschaftlichen Schäden führen können.

Letztlich ist ein ganz entscheidender Vorteil des erfindungsgemäßen Konzepts auch darin zu sehen, daß durch die größere Verfügbarkeit der Rechenanlage außerhalb der normalen Dienststunden umfangreiche Arbeiten durchgeführt werden können, die die Anlage während der normalen Betriebszeiten entlasten, so daß bei sinnvoller Nutzung der zusätzlich verfügbaren Zeit, in der kein Mitarbeiter im Rechenzentrum anwesend sein muß, Belastungspitzen abgebaut werden, die andernfalls bereits eine Kapazitätserweiterung der Anlage erforderlich machen würden.

Besonders vorteilhaft ist es,wenn der Personalcomputer in Ausgestaltung der Erfindung über einen seiner Ein/Ausgangs-Anschlüsse mit Fernbedienungseinrichtungen verbunden ist, die vorzugsweise eine Serienschaltung einer mit diesem Ein/Ausgangs-Anschluß verbundenen Wählgeräte/Modem-Einheit, einer Telefonverbindung und einer weiteren Wählgeräte/Modem-Einheit umfassen, mit der als Bedienungseinheit ein tragbarer Personalcomputer verbunden ist.

Das Bestehen von Fernbedienungseinrichtungen mit einem tragbaren Personalcomputer als Bedienungseinheit eröffnet zunächst einmal die Möglichkeit, die Rechenanlage praktisch von jedem Telefonanschluß aus in Betrieb zu nehmen und abzuschalten. Zusätzlich besteht bei Einsatz eines tragbaren Personalcomputers bei Verwendung der entsprechenden Software auch die Möglichkeit, den laufenden Betrieb des Rechenzentrums außerhalb der Wechselschichtzeiten von einem externen Telefonanschluß aus zu überwachen, wobei die Alarmierung von Mitarbeitern, die zum Bereitschaftsdienst eingeteilt sind, beim Auftreten von Störungen in der Rechenanlage insbesondere auch über ein Euro-Signalrufgerät erfolgen kann. Über den tragbaren Personalcomputer besteht dann auch die Möglichkeit einer weitgehenden Störungsbehebung durch Konzentration der Steuerung und Verwaltung unterschiedlich angeschlossener Bildschirme auf einen einzigen Personalcomputer der Rechenanlage.

Weitere Einzelheiten und Vorteile der Erfindung werden nachstehend anhand von Zeichnungen noch näher erläutert und/oder sind Gegenstand von Unteransprüchen. Es zeigen:
- Fig. 1: eine stark schematisierte Gesamtübersicht einer bevorzugten Ausführungsform einer Rechenanlage gemäß der Erfindung mit den zugehörigen Fernbedienungseinrichtungen und
- Fig. 2: ein detaillierteres Blockschaltbild der Anlage gemäß Fig. 1.

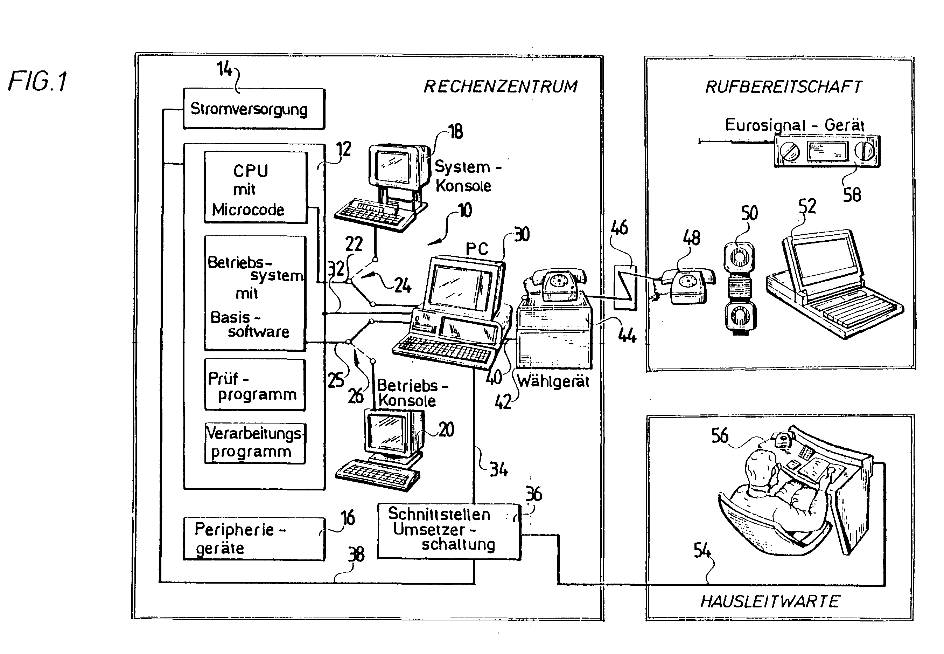

Im einzelnen zeigt Fig. 1 ein Großrechnersystem 10, welches den eigentlichen Rechner 12, eine Stromversorgung 14 und Peripheriegeräte 16 wie Drucker, Plattenspeicher usw. umfaßt. Außerdem gehören zu dem Großrechnersystem eine Systemkonsole 18 und eine weitere Konsole 20, die Betriebs-bzw. Betriebssystem-Konsole. Diese beiden Bedienungskonsolen 18, 20 sind normalerweise direkt mit dem Rechner 12, und zwar mit dessen Prozessorsteuereinheit bzw. über eine Bildschirmschnittstelle mit dessen Prozessor verbunden, wie dies weiter unten näher erläutert werden wird. Gemäß der Erfindung ist in die Verbindungsleitung 22 zwischen der Systemkonsole 18 und dem Rechner 12 ein Umschalter 24 eingefügt. In ensprechender Weise ist in die Verbindungsleitung 25 zwischen dem Rechner 12 und der Betriebs-Konsole 20 ein Umschalter 26 eingefügt. Die beiden Bedienungskonsolen 18, 20 werden normalerweise direkt mit dem Rechner 12 verbunden. Dieser Zustand würde der gestrichelt eingezeichneten Stellung der Schaltarme der Umschalter 24, 26 entsprechen.

An dieser Stelle sei angemerkt, daß speziell in der allgemeinen Systemdarstellung gemäß Fig. 1 zur Erhöhung der Übersichtlichkeit diverse Vereinfachungen durchgeführt werden, wobei im Rahmen der vorliegenden Anmeldung in diesem Zusammenhang nicht auf nähere Einzelheiten eingegangen werden soll, da die üblichen Verbindung zwischen den Komponenten eines Großrechnersystems bzw. einer Rechenanlage dem Fachmann geläufig sind und keiner näheren Erläuterung bedürfen.

Die Rechenanlage gemäß Fig. 1 umfaßt ferner einen Personalcomputer 30, der über eine Leitung 32 direkt mit dem Rechner 12 verbunden ist. Dabei ist anzumerken, daß diese direkte Verbindung zwischen einem Personalcomputer 30 und dem Rechner 12 eines Großrechnersystems bei Rechenanlagen bekannt ist und die Möglichkeit schafft, den an sich selbständigen Personalcomputer 30 als Terminal des Großrechnersystems zu betreiben. Außerdem ist der Personalcomputer 30 gemäß der Erfindung über die Umschalter 24, 26 mit den Verbindungsleitungen 22, 26 und damit über zwei weitere Anschlüsse mit dem Rechner 12 verbunden. Ferner besitzt der Personalcomputer 30 einen Ausgang, der über eine Leitung 34 mit einer Schnittstellen/Umsetzerschaltung 36 verbunden ist, die über eine Ausgangsleitung 38 mit der Stromversorgung 14 und einem weiteren Eingang des Rechners 12 verbunden ist. Schließlich ist darauf hinzuweisen, daß der Personalcomputer 30 normalerweise ständig eingeschaltet bleibt und während der Betriebsunterbrechungen des Großrechnersystems beispielsweise aus einem Akkumulator gespeist wird.

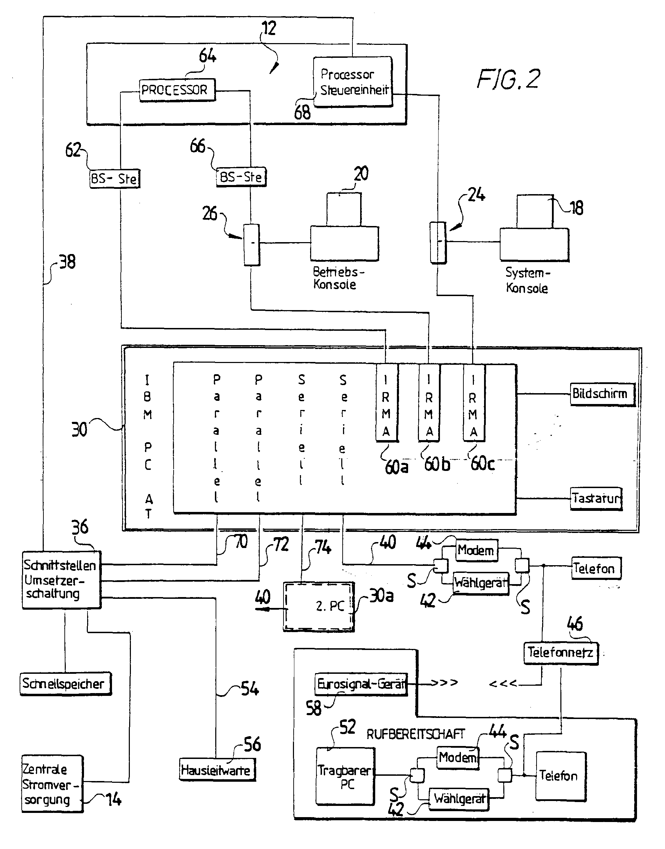

In der in Fig. 1 mit ausgezogenen Linien eingezeichneten Stellung der Schaltarme der Umschalter 24, 26 sind die beiden Bedienungskonsolen 18, 20 von dem Rechner 12 getrennt. Die Funktion der beiden Bedienungskonsolen 18, 20 wird von dem Personalcomputer 30 übernommen. Die Voraussetzungen für den Ersatz der Bedienungskonsolen 18, 20 durch den Personalcomputer 30 werden weiter unten anhand des Blockschaltbildes gemäß Fig. 2 noch weiter erläutert werden. An dieser Stelle möge der Hinweis genügen, daß bei der erfindungsgemäßen Rechenanlage die Möglichkeit besteht, daß der Personalcomputer 30 die Funktionen der Systemkonsole 18 und der MVS-Konsole 20 zumindest so weitgehend übernehmen kann, daß das Hochfahren der Rechenanlage, das Abschalten der Rechenanlage, die Betriebsüberwachung der Rechenanlage und eine weitgehende Störungsbehebung von in der Rechenanlage aufgetretenen Störungen über den Personalcomputer 30 erfolgen kann, der ebenso wie jedes andere Terminal in einer mehr oder weniger großen Entfernung von der Zentrale der Rechenanlage installiert sein kann (maximal etwa 500 m).

In Ausgestaltung der Erfindung ist ein weiterer Anschluß 40 des Personalcomputers 30 über ein Wählgerät 42 mit einem zugehörigen Modem 44, das heißt einer Modulator/Demodulator-Einheit mit dem Telefonnetz 46 verbindbar. Mit Hilfe einer von dem Personalcomputer 30 erzeugten Wählinformation, die von dem Wählgerät 42 in entsprechende Wählimpulse umgesetzt wird, kann also über das Telefonnetz 46 eine Verbindung zu einem beliebigen anderen Telefonanschluß 48 hergestellt werden, wo dann bei Eingehen eines Anrufs aus dem Rechenzentrum, beispielsweise über einen Akustikkoppler 50 eine Verbindung zu einem anderen Rechner hergestellt werden kann, bei dem es sich in der Praxis um einen tragbaren Personalcomputer 52 handelt. Die von dem tragbaren Personalcomputer 52 ausgegebenen Informationen und Daten können über den Akustikkoppler 50 und das Telefonnetz 46 zu dem Modem 44 zurückübertragen werden, wo sie wieder in Digitalsignale umgesetzt werden, welche über den Anschluß 60 dem Personalcomputer 30 zugeführt werden können. (In Fig. 2 der Zeichnung sind entsprechende elektronische Schalter S angedeutet, mit deren Hilfe in Abhängigkeit von der Übertragungsrichtung entweder das Wählgerät 42 oder das Modem 44 in den Signalweg eingeschaltet werden kann.)

Wie vorstehend beschrieben, kann also der Personalcomputer 30 in Abhängigkeit von vorgegebenen Ereignissen, wie zum Beispiel einer Störung, von sich aus und automatisch Kontakt zu einem externen Telefonteilnehmer aufnehmen, nämlich zu einem in Rufbereitschaft befindlichen Mitarbeiter, der sich dann in der beschriebenen Weise mit seinem tragbaren Personalcomputer 52 an die Rechenanlage anschließen kann. Als vorteilhaft hat es sich zusätzlich erwiesen, wenn Störungsmeldungen, beispielsweise über Störungen im Personalcomputer 30 selbst, die mit Hilfe entsprechender Sensoren erfaßt werden, über die Schnittstellen/Umsetzer-Schaltung auf einer Alarmleitung 54 an eine ständig besetzte Hausleitwarte 56 gemeldet werden, von wo der in Rufbereitschaft befindliche Mitarbeiter über ein Eurosignalgerät 58 alarmiert wird und daraufhin Kontakt mit der Rechenanlage 10 bzw. mit dem Personalcomputer 30 aufnimmt. Dabei hat es sich als vorteilhaft erwiesen, wenn auch zu dem tragbaren Personalcomputer 52 anstelle eines Akustikkopplers, der nur relativ langsam arbeitet, ein Wählgerät 42′ und ein Modem 44′ gehören (vgl. Fig. 2). Bei dieser Ausgestaltung wird, insbesondere nach Eingang eines Alarms, durch Eingabe der Rufnummer in den Personalcomputer 52 zunächst die Verbindung zum Modem 44 des Wählgeräts 42 hergestellt und von dort die Verbindung zu dem Personalcomputer 30. Letzterer kann nunmehr Sicherheitscodes und Kennungen überprüfen, die von dem Mitarbeiter am tragbaren Personalcomputer 52 eingegeben werden. Wenn dabei die Berechtigung des anrufenden Mitarbeiters für einen Zugriff zu der Rechenanlage festgestellt wird, kann als zusätzliche Sicherheitsmaßnahme eine Unterbrechung der bestehenden Telefonverbindung erfolgen und mit Hilfe des Wählgeräts 42 unter Steuerung durch den Personalcomputer 30 eine neue Verbindung zu dem Teilnehmeranschluß der Rufbereitschaft hergestellt werden.

Betrachtet man nunmehr Fig. 2 der Zeichnung, so erkennt man, daß der Personalcomputer 30, der im übrigen in üblicher Weise aufgebaut ist und beispielsweise ein IBM-AT-Personalcomputer sein kann, außer dem Bildschirm und der Tastatur sowie den üblichen Rechen- und Speichereinrichtungen sowie den Schnittstellen - in der Zeichnung sind zwei parallele Schnittstellen und zwei serielle Schnittstellen angedeutet - drei Zusatzkarten 60 umfaßt. Eine dieser Zusatzkarten dient dabei der eingangs erläuterten Möglichkeit, den Personalcomputer 30, der ansonsten einen völlig selbständigen Rechner darstellt, auch als Terminal des Rechners 12 der Rechenanlage 10 einsetzen zu können. Dabei ist die Zusatzkarte 60a, die diesem Zweck dient, eine handelsübliche Steckkarte, die in eine dafür vorgesehene Steckleiste des Personalcomputers 30 eingesteckt wird und die beispielsweise für IBM-Personalcomputer als "IRMA"-Karte ein handelsüblicher Rechnerbaustein der U.S. Firma DCA ist, welcher beispielsweise von der Firma M & S Elektonok GmbH, 8751 Niedernberg, vertrieben wird.

Im einzelnen umfaßt eine solche Zusatzkarte 60 eine eigene Recheneinheit (CPU), die unter Steuerung durch einen programmierbaren Lesespeicher arbeitet und sowohl von dem Rechner 12 als auch von dem Personalcomputer 30 mit einer bestimmten Adressierung angesteuert werden kann, um einen Austausch von Daten und Steuersignalen zwischen den beiden Rechnern zu ermöglichen. Dabei zeigt Fig. 2, daß die bisher als Brücke zwischen dem Hauptrechner 12 und dem Personalcomputer 30 verwendete Zusatzkarte 60a über eine Bildschirmsteuereinheit 62 mit dem Prozessor 64 des Rechners 12 verbunden ist. Die beiden gemäß der Erfindung zusätzlich vorgesehenen weiteren Zusatzkarten 60b, 60c, sind bei der in Fig. 1 und 2 gezeigten Schaltstellung der Umschalter 24, 26 über eine weitere Bildschirmsteuereinheit 66 mit dem Hauptrechner 12 bzw. direkt mit dessen Processorsteuereinheit 68 verbunden. Dabei sind den weiteren Zusatzkarten 60b und 60c andere Adressen zugeordnet als der Zusatzkarte 60a, und zwar zwei verschiedene Adressen, so daß letztlich jede der Zusatzkarten 60a bis 60c von dem Personalcomputer 30 einerseits und über die zuvor beschriebenen Verbindungen zum Hauptrechner andererseits von diesem adressenmäßig ansteuerbar ist. Aufgrund der beschriebenen Ausgestaltung ergibt sich damit die Möglichkeit, daß der Personalcomputer 30 die Funktionen der beiden Bedienungskonsolen 18, 20 übernimmt. Außerdem steuert der Personalcomputer 30 über die Schnittstellen/Umsetzerschaltung 36 die Ein/Ausschaltfunktion für die Processorsteuereinheit 68 und die Stromversorgung 14.

Die über die Tastatur bzw. Programme des Personalcomputers 30 eingegebenen Befehle und Informationen werden über die eine parallele Schnittstelle auf einer Ausgangsleitung 70 an die Schnittstellen/Umsetzerschaltung 36 ausgegeben und gelangen von dieser an die verschiedenen Baugruppen der Stromversorgung, wobei die entsprechenden Rückmeldungen von den angesteuerten Schaltkreisen und der Prozessorsteuereinheit 68 über die Schnittstellen/Umsetzerschaltung 36 bzw. die Systemkonsolen-Karte 60c dem Personalcomputer 30 zugeführt werden und so die Daten über den Zustand der Rechenanlage auf dem laufenden halten - Aufdatieren der Systemzustandsmatrix.

Über eine zweite parallele Schnittstelle liefert der Personalcomputer 30 auf einer Leitung 72 in regelmäßigen zeitlichen Abständen Ausgangssignale, die der Schnittstellen/Umsetzerschaltung 36 einen einwandfreien Zustand des Personalcomputers 30 signalisieren. Diese Signale werden vorzugsweise durch periodische Abfrageimpulse der Schaltung 36 von dem Personalcomputer 30 abgerufen. Bei Störung des Personalcomputers 30 erfolgt dabei ein Alarm in der Hausleitwarte 56.

Eine der erwähnten seriellen Schnittstellen ist über die bereits in Fig. 1 gezeigte Anschlußleitung 40 mit den oben detailliert erläuterten Fernbedienungseinrichtungen verbunden. Ferner könnte mit der zweiten seriellen Schnittstelle über eine Leitung 74 ein weiterer Personalcomputer 30a verbunden sein, wie dies mit gestrichelten Linien angedeutet ist, wobei dieser zweite Personalcomputer 30 a für ein weiteres Großrechnersystem (nicht gezeigt) dieselben Funktionen übernehmen könnte, die der Personalcomputer 30 in der hier betrachteten Rechenanlage hat. Die Fernbedienungseinrichtungen mit dem tragbaren Personalcomputer 52 würden in diesem Fall über den ersten Personalcomputer 30 und dessen eine serielle Schnittstelle über die Leitung 74 in Wechselwirkung mit dem zweiten Personalcomputer 30 a treten. Dem zweiten Personalcomputer 30 a können aber auch eigene Fernbedienungseinrichtungen zugeordnet sein, wie dies durch den in der Zeichnung freien Anschluß 40 angedeutet ist. Ferner besteht bei Rechenanlagen, die zwei oder mehr Großrechnersysteme umfassen, die Möglichkeit, zwischen den Anschlüssen mindestens zweier vollständiger Sätze von Fernbedienungseinrichtungen und den zugeordneten Anschlüssen der zu den einzelnen Großrechnersystemen gehörigen Personalcomputer Umschalteinrichtungen vorzusehen, über die jeder Satz von Fernbedienungseinrichtungen wahlweise mit den zu unterschiedlichen Großrechnersystemen gehörigen Personalcomputern verbunden werden kann.

Aus der vorstehenden Beschreibung wird deutlich, daß gemäß der Erfindung die Möglichkeit geschaffen wird, eine Rechenanlage, die gegebenenfalls mehrere Großrechnersysteme umfassen kann, durch den Einsatz jeweils eines Personalcomputers pro Großrechnersystem weitgehend automatisch zu betreiben, indem man das Hochfahren der einzelnen Großrechnersysteme bis zur Betriebsbereitschaft und das Abschalten der Systeme mittels entsprechender Steuerprogramme eines ständig in Betriebsbereitschaft befindlichen Personalcomputers durchführt, mit dessen Hilfe auch Störungen erkannt und gegebenenfalls behoben werden können. Dabei ist nur eine vergleichsweise geringfügige Umrüstung des einzelnen Personalcomputers gegenüber einem Standard-Personalcomputer erforderlich, der als selbständige Einheit oder als Terminal des zugehörigen Großrechnersystems betrieben werden kann. Genauer gesagt, muß der Personalcomputer lediglich mit zwei weiteren handelsüblichen Zusatzkarten bestückt werden, die ebenfalls nur geringfügig modifiziert werden, beispielsweise durch die zusätzliche Bestückung mit einem Inverter-Baustein, der dafür sorgt, daß jede der drei Zusatzkarten des fertig installierten Personalcomputers jeweils auf eine andere Adresse anspricht und damit sowohl vom Großrechnersystem als auch vom Personalcomputer gezielt angesteuert werden kann.

Die Möglichkeiten der erfindungsgemäßen Rechananlage werden dadurch noch erheblich erweitert, daß die Personalcomputer über zugeordnete Fernbedienungseinrichtungen ansteuerbar sind, so daß bei solchen Störungen, die nicht intern behoben werden können, ein alarmierter Mitarbeiter, der sich außerhalb des Rechenzentrums in Rufbereitschaft befindet, über einen tragbaren Personalcomputer versuchen kann, aufgetretene Störungen zu beheben und gegebenenfalls ein als Reserve verfügbares Großrechnersystem zu aktivieren. Durch einen gut geschulten Mitarbeiter, der den entsprechenden Überblick über die Gesamtanlage hat, lassen sich dabei insbesondere relativ ausgefallene Störfälle beheben, die bei der Erstellung der entsprechenden Steuerprogramme für den in der Rechenanlage befindlichen Personalcomputer noch nicht berücksichtigt wurden.

Hierdurch werden die Anwesenheitszeiten für das Bedienungspersonal im Rechenzentrum selbst verkürzt und wichtige Voraussetzungen für einen effektiven Betrieb der Rechenanlage außerhalb der normalen Arbeitszeiten, insbesondere während der Nachtstunden, an Wochenenden und an Feiertagen geschaffen.

## Patentansprüche

1. Rechenanlage mit einem Großrechnersystem mit zwei Bedienungskonsolen und mit einem Personalcomputer, welcher als selbständiger Rechner oder als Terminal des Großrechnersystems betreibbar ist und für die letztgenannte Betriebsart mit einer Zusatzkarte ausgestattet ist, auf der sich Schaltkreise zur Umsetzung von Informationen des Großrechnersystems in durch den Personalcomputer verarbeitbare Daten unter Steuerung durch eine zentrale Recheneinheit (CPU) der Karte und in Abhängigkeit vom Inhalt eines programmierbaren Lesespeichers der Karte sowie zur Umwandlung von Informationen des Personalcomputers in durch das Großrechnersystem verarbeitbare Informationen befinden, dadurch gekennzeichnet, daß der Personalcomputer (30) mindestens zwei weitere derartige Zusatzkarten (60 b, 60 c) umfaßt, welchen verschiedene, jeweils von der Adresse der ersten Zusatzkarte (60a) abweichende Adressen zugeordnet sind und die anstelle der Bedienungskonsolen (18, 20) des Großrechnersystems (10) mit diesem verbindbar sind, und daß der Personalcomputer (30) ausgangsseitig mit der Prozessorsteuereinheit des Großrechnersystems über eine Schnittstellen/Umsetzerschaltung (36) verbunden ist, mit der Schalteinrichtungen zum Ein- und Ausschalten des Großrechnersystems (10) verbunden sind.

2. Rechenanlage nach Anspruch 1, dadurch gekennzeichnet, daß der Personalcomputer (30) über einen seiner Ein/Ausgangs-Anschlüsse (40) mit Fernbedienungseinrichtungen (42, 44, 46, 48, 50, 52) verbunden ist.

3. Rechenanlage nach Anspruch 2, dadurch gekennzeichnet, daß die Fernbedienungseinrichtungen eine Serienschaltung einer mit dem Ein/Ausgangs-Anschluß (40) verbundenen Wählgeräte/Modem-Einheit (42, 44), einer Telefonverbindung (46) und einer weiteren Wählgeräte/Modem-Einheit (42′, 44′) umfassen, mit der als Bedienungseinheit ein tragbarer Personalcomputer (52) verbunden ist.

## Claims

1. Computer system comprising a mainframe system having two operating consoles and a personal computer operable as an independent computer or as a terminal of the mainframe system and being equipped for the last-mentioned operating mode with an add-on card comprising circuits for converting information from the mainframe system into data processable by the personal computer, controlled by a central processing unit (CPU) of the card and as a function of the content of a programmable read memory of the card, as well as for converting information from the personal computer into information processable by the mainframe system, characterized in that the personal computer (30) comprises at least two additional add-on cards (60 b, 60 c) of this type, different addresses each differing from the address of the first add-on card (60a) being associated with said additional cards and said additional cards being connectable to the mainframe system (10) instead of the operating consoles (18, 20) thereof, and that the personal computer (30) is connected on the output side to the processor control unit of the mainframe system via an interface/converter circuit (36), switching means for switching the mainframe system (10) on and off being connected to said circuit.

2. Computer system as defined in claim 1, characterized in that the personal computer (30) is connected via one of its input/output connections (40) to remote control means (42, 44, 46, 48, 50, 52).

3. Computer system as defined in claim 2, characterized in that the remote control means comprise a serial circuit of a dialling/modem unit (42, 44) connected to the input/output connection (40), a telephone connection (46) and an additional dialling/modem unit (42′, 44′), a portable personal computer (52) being connected to said unit as operating unit.

## Revendications

1. Installation informatique comportant un système d'ordinateur principal comprenant deux pupitres de service et un ordinateur personnel qui peut s'exploiter comme calculateur autonome ou comme terminal du système d'ordinateur principal et qui, pour le mode d'exploitation mentionné en dernier lieu, est équipé d'une carte supplémentaire sur laquelle se trouvent des circuits pour convertir les informations du système d'ordinateur principal en données exploitables par l'ordinateur personnel sous la commande d'une unité centrale de calcul (CPU) de la carte et en fonction du contenu d'une mémoire fixe programmable de la carte ainsi que pour convertir des informations de l'ordinateur personnel en informations que peut traiter le système d'ordinateur principal, installation caractérisée par le fait que l'ordinateur personnel (30) comporte au moins deux autres cartes supplémentaires (60b, 60c) de ce type auxquelles correspondent différentes adresses qui s'écartent chaque fois de l'adresse de la première carte supplémentaire (60a) et qui peuvent être reliées avec le système d'ordinateur principal (10) à la place des pupitres de service (18, 20) de ce système, et par le fait que, du côté sortie, l'ordinateur personnel (30) est relié avec l'unité de commande à processeur du système d'ordinateur principal par l'intermédiaire d'un circuit de conversion/d'interfaces (36) auxquels sont reliés des dispositifs de mise en circuit pour la mise en circuit et hors circuit du système d'ordinateur principal (10).

2. Installation informatique selon la revendication 1, caractérisée par le fait que, par l'intermédiaire de l'un de ses raccords d'entrée/sortie (40), l'ordinateur personnel (30) est relié avec des dispositifs de télécommande (42, 44, 46, 48, 50, 52).

3. Installation informatique selon la revendication 2, caractérisée par le fait que les dispositifs de télécommande comportent un circuit de série qui est constitué d'un ensemble composeur de numéros téléphoniques/modem (42, 44) relié au raccord d'entrée/sortie (40), d'une liaison téléphonique (46) et d'un autre ensemble composeur de numéros téléphoniques/modem (42′, 44′) et auquel est relié, en tant qu'unité de commande, un ordinateur personnel portable (52).
